# FASCICULE DE BREVET EUROPEEN

(11) **EP 2 229 847 B1**
(45) Date de publication et mention de la délivrance du brevet: **08.02.2012**
(21) Numéro de dépôt: 09306330.3
(22) Date de dépôt: 28.12.2009
(51) Int. Cl.: A47C 9/06, G03B 17/53

(54) **Siège pour installation d'acquisition de données, notamment biométriques, d'une personne, et un tel installation intégrant un tel siège.**
Sitz für eine Vorrichtung zur Erfassung von Daten einer Person, insbesondere von biometrischen Daten, und eine solche Vorrichtung mit einem solchen Sitz
Seat for an installation for the acquisition of data of a person, particularly of biometric data, and an installation incorporating such a seat

(30) Priorité: 17.03.2009 FR 0901231
(43) Date de publication de la demande: 22.09.2010
(73) Titulaire: Photo ME Holding France, 38130 Echirolles (FR)
(72) Inventeur: Cantisano, Philippe, 38130 ECHIROLLES (FR)
(74) Mandataire: Vuillermoz, Bruno

(56) Documents cités:
- FR-A1- 2 901 945
- JP-A- 2000 197 537
- JP-A- 2003 210 279
- US-A1- 2005 179 778
- US-B1- 6 692 076

## Description

### DOMAINE TECHNIQUE

La présente invention appartient au domaine des cabines et autres installations d'acquisition de données. Elle vise plus particulièrement le domaine des installations d'acquisition de données biométriques, d'un utilisateur, notamment en vue de la réalisation de pièces officielles.

Elle concerne plus spécifiquement l'accessibilité de telles installations à l'ensemble de la population, qu'il s'agisse d'adultes, d'enfants, y compris en bas âge et de personnes à mobilité réduite se déplaçant notamment en fauteuil roulant.

### ETAT ANTERIEUR DE à TECHNIQUE

Les cabines d'acquisition de données biométriques, qu'il s'agisse de photos d'identité, d'empreintes digitales, voire de signature, en vue de la délivrance de pièces officielles du type permis de conduire, cartes d'identité, passeports et autres, sont d'un usage largement répandu. Pour l'essentiel, elles se composent d'un châssis intégrant les différents moyens d'acquisition des données en question, et notamment caméras, appareils photos, etc.., outre des moyens d'éclairement nécessaires, mais également un siège, réglable en hauteur, afin de permettre le positionnement du visage de la personne concernée dans un cadre matérialisé sur un écran.

Si ces installations répondent de manière relativement satisfaisante aux attentes de la plupart des utilisateurs, en revanche, se pose le problème des personnes à mobilité réduite se déplaçant en fauteuil roulant. En effet, de par la présence de ce siège, en général inamovible, il n'est pas possible de permettre l'introduction du fauteuil roulant au sein de l'installation, les privant de la possibilité d'utiliser de telles installations.

Afin de pallier cette difficulté, il a été proposé dans le document FR-2 901 945, une cabine automatique pour la prise de vue et la réalisation de photos d'identité, dans laquelle le siège est amovible, de telle sorte à libérer l'espace d'introduction d'un fauteuil roulant. Pour autant, l'amovibilité du siège décrit dans cette installation est relativement complexe à réaliser.

Le document US 2005/0 0179 778 A1 divulgue également une telle cabine automatique pour la prise de vue et la réalisation de photos d'identité avec siège amovible. Le siège peut être deplacé horizontalement ou basculé verticalement pour libérer l'espace pour l'introduction d'un fauteil roulant.

Au surplus, la réalisation de photos d'identité pour enfants en bas âge, c'est-à-dire insusceptibles de présenter une station assise stable, n'est pas possible, alors même que, notamment lors de la réalisation de passeports, la photo de tels nourrissons est impérative.

L'objectif visé par la présente invention réside justement dans la possibilité de la réalisation de l'acquisition de données biométriques, et notamment de photos d'identité, à toutes les catégories d'utilisateurs, quel que soit leur âge et quel que soit leur degré de mobilité.

### EXPOSE DE L'INVENTION

A cet effet, l'invention vise tout d'abord un siège pour une installation du type en question, qui comprend :
- une platine rotative montée sur un bâti ;
- une assise, articulée sur ladite platine, selon un axe non concourant avec l'axe de rotation de ladite platine, de telle sorte à définir une position escamotée et au moins une position opérationnelle ;
- des rambardes latérales, articulées le long des deux bords latéraux de l'assise et aptes à coopérer avec ladite platine rotative de telle sorte à stabiliser l'assise en position opérationnelle et typiquement horizontale.

En d'autres termes, l'invention consiste tout d'abord à mettre en oeuvre des moyens particulièrement simples pour assurer le caractère escamotable de l'assise, et ensuite à définir les différentes positions opérationnelles de l'assise en agissant sur le caractère rotatif de la platine sur laquelle est montée l'assise.

En effet, l'axe d'articulation de l'assise sur la platine n'est pas concourant avec l'axe de rotation de la platine, mais s'étend selon une corde de celle-ci de sorte que par rotation de la platine de 180°, on définit deux hauteurs différentes de ladite assise lorsque celle-ci est montée en position opérationnelle, c'est-à-dire lorsqu'elle s'étend sensiblement perpendiculairement par rapport à la platine, respectivement une position basse pour les adultes, pour laquelle l'axe d'articulation de l'assise est plus bas que l'axe de rotation de la platine, et une position haute pour les enfants, pour laquelle l'axe d'articulation de l'assise est plus haut que l'axe de rotation de la platine. Typiquement, cette position haute est dévolue pour les enfants entre 1 et 8 ans, sans que cette indication ne présente un quelconque caractère limitatif.

Selon l'invention, les rambardes latérales sont munies de moyens verrouillables de fixation, coopérant avec la platine, et aptes à assurer la fixation de l'assise en position opérationnelle, c'est-à-dire en position dépliée.

Selon une autre caractéristique avantageuse de l'invention, la platine est munie de moyens de verrouillage sur le bâti sur lequel elle est montée, selon deux positions angulaires prédéfinies, séparées l'une de l'autre d'un angle de 180°, et ce, afin de définir les deux positions opérationnelles précédemment mentionnées, respectivement basse pour adultes et haute pour enfants.

Avantageusement, l'assise est munie de moyens de fixation réversibles en position rabattue, c'est-à-dire escamotée, contre la platine ou le bâti, ce moyen étant typiquement constitué d'au moins un aimant permanent ou tout autre système de maintien.

La présente invention vise également une installation proprement dite d'acquisition de données, notamment biométriques d'une personne, intégrant le siège précédemment décrit. Cette installation comporte un bâti, ouvert au moins au niveau de l'une de ses faces latérales, et muni de moyens d'acquisition desdites données biométriques.

Avantageusement, les deux faces latérales du bâti sont ouvertes afin de faciliter l'accès de fauteuils roulants à l'intérieur et leur sortie, lesdites faces latérales étant occultables réversiblement au moyen de rideaux ou équivalents afin d'optimiser la qualité des prises de vue lorsqu'il s'agit de réaliser des photos d'identité et de réserver une certain intimité.

Le siège du type en question est alors fixé contre la face interne postérieure de l'installation, faisant face à la paroi comportant les moyens techniques d'acquisition des données, notamment biométriques, et notamment intégrant une caméra vidéo ou un appareil photo numérique ainsi que des moyens d'éclairage *ad hoc.*

Selon une caractéristique avantageuse de l'invention, le plafond de ladite cabine est muni également d'une caméra numérique ou d'un appareil photo numérique, outre de moyens d'éclairage, propres à permettre l'acquisition des photos d'identité d'un nourrisson, positionné sur l'assise montée en position opérationnelle haute pour enfant, le nourrisson étant évidemment en position allongée sur ladite assise.

### BREF EXPOSE DES FIGURES

La manière dont l'invention peut être réalisée et les avantages qui en découlent ressortiront mieux de l'exemple de réalisation qui suit, donné à titre indicatif et non limitatif à l'appui des figures annexées.
Les figures 1 à 4 sont des représentations schématiques en perspective d'une installation d'acquisition de données biométriques montrant différentes configurations du siège caractéristique de l'invention.
La figure 5 est une vue plus détaillée du siège conforme à l'invention en position haute pour enfant.
La figure 6 est une vue analogue à la figure 5 du siège en position basse pour adulte.
La figure 7 est une vue du siège en position escamotée.
La figure 8 illustre le principe mis en oeuvre pour assurer la rotation de l'assise du siège en question.
La figure 9 est une représentation schématique du boîtier postérieur sur lequel vient se fixer le siège de l'invention.
Les figures 10 à 12 illustrent le principe de verrouillage des rambardes latérales sur la platine.

### MODE DE REALISATION DE L'INVENTION

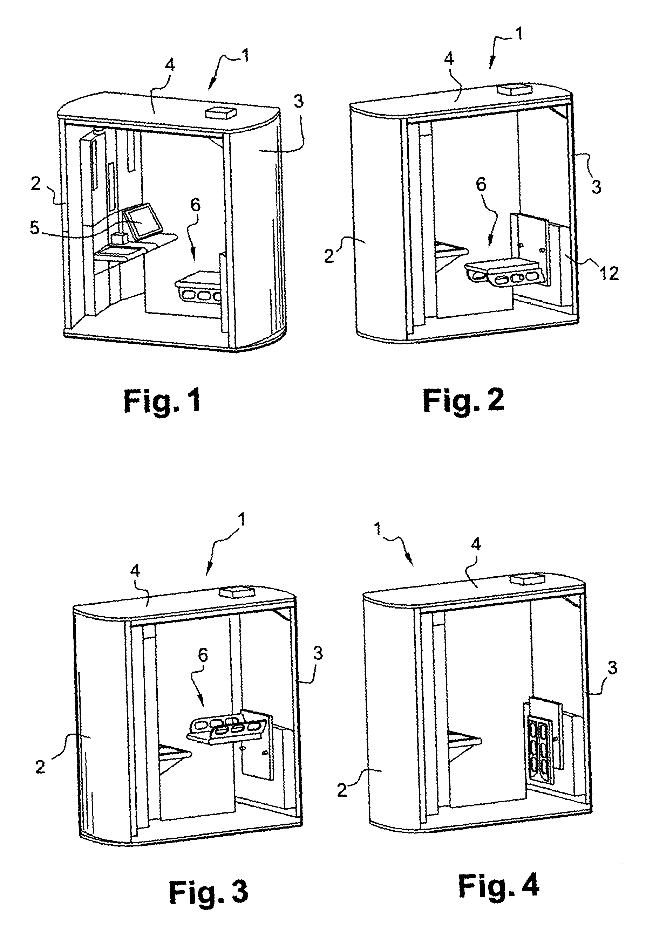

On a donc représenté en relation avec les figures 1 à 4, une installation ou cabine d'acquisition de données, en l'espèce de données biométriques d'une personne, et notamment de photos d'identité, voire d'empreintes digitales et de signatures.

En l'espèce, cette installation se présente sous la forme d'un châssis (1) comportant deux parois verticales, respectivement antérieure (2) et postérieure (3), et un plafond ou toit (4) reliant les deux parois. Comme on peut l'observer sur lesdites figures, les faces verticales latérales de ladite cabine ne sont pas obturées. Dans les faits, elles sont obturables réversiblement au moyen d'un rideau (non représenté), de telle sorte à optimiser la qualité des prises de vue et améliorer le confort et l'intimité du sujet.

On a matérialisé sur la figure 1 les différents moyens permettant l'acquisition effective des données biométriques, outre le clavier interactif (5) permettant d'afficher le déroulement des différentes séquences pour réaliser cette acquisition.

Selon l'invention, cette cabine comporte un siège (6) susceptible de présenter un certain nombre de configurations.

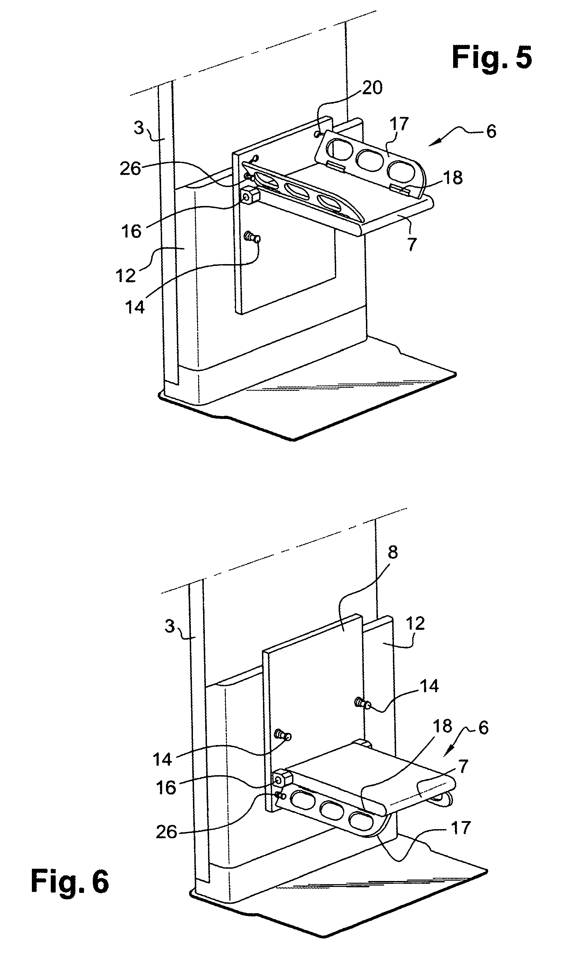

Ce siège a été représenté plus en détail en relation avec les figures 5 à 8.

Celui-ci comporte fondamentalement une assise plane (7), articulée sur une platine (8) selon un axe d'articulation (16), ladite platine étant elle-même montée au niveau de la paroi interne de la face postérieure (3) de ladite cabine, et plus précisément sur un boîtier postérieur (12) adossé à ladite paroi, et de manière générale au bâti (10) définissant l'installation.

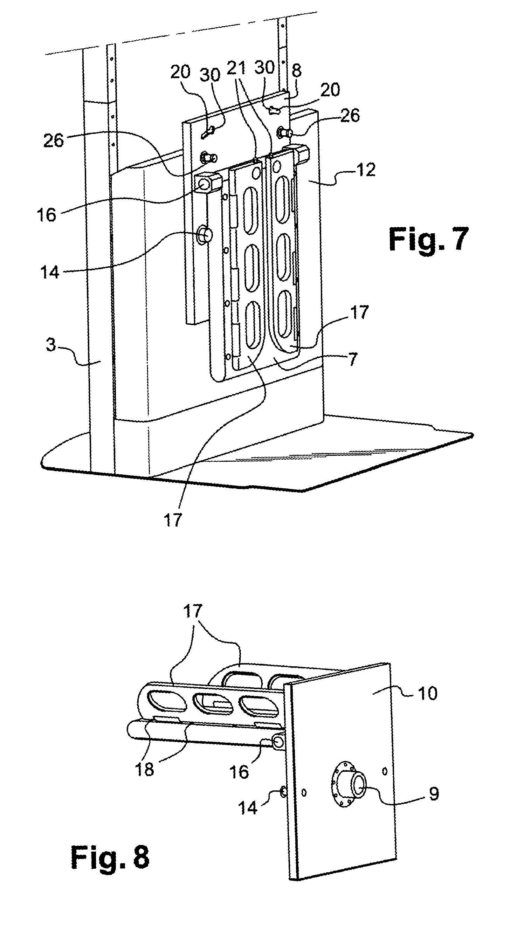

Selon une caractéristique de l'invention, cette platine (8) est montée rotative par rapport à un axe horizontal (9), ainsi qu'on peut l'observer notamment sur les figures 7 et 8. Plus précisément, la platine (8) prend appui contre une plaque de glissement (11), typiquement réalisée en PTFE, elle-même intégré dans le boitier postérieur (12) adjacent à la paroi postérieure (3) du châssis de la cabine. Ce boitier reçoit typiquement des moyens d'éclairage postérieurs, optimisant de manière connue, la qualité des prises de vue.

En outre, l'axe de rotation (9) de la platine (8) est reçu dans un pallier de rotation assemblé sur la structure porteuse de la cabine et solidarisée au niveau de ce pallier au moyen d'une patte de bridage, et ce de manière conventionnelle.

L'assise (7) est donc elle-même susceptible de présenter différentes orientations et, en l'espèce, deux orientations fondamentales, par ailleurs indexées au moyen d'organes d'indexation et de fixation (14) montés sur la platine (8), et aptes à coopérer avec des orifices (15), ménagés à cet effet au sein du boitier postérieur (12) :
- une première orientation, telle que par exemple illustrée au sein des figures 1 et 2, et sur la figure 6, dite position adulte ; et
- une seconde orientation, telle qu'illustrée en figures 3 et 5, dite position enfant.

Ces deux configurations sont obtenues par simple pivotement de la platine (8) de 180° par rapport à son axe de rotation.

En effet, attendu que l'axe d'articulation (16) de l'assise (7) sur la platine (8) n'est pas concourant avec l'axe de rotation (9) de la platine (8), mais s'étend selon une corde du disque virtuel selon lequel ladite platine est susceptible de tourner, la hauteur de l'assise dans ces deux positions respectives est différente, plus basse pour la position adulte, et plus haute pour la position enfant.

Selon une autre caractéristique de l'invention, l'assise (7) est munie de rambardes latérales (17), s'étendant le long de ses deux bords latéraux et articulés au niveau de ceux-ci, par exemple au moyen de charnières (18). Cependant, le débattement de la rotation des rambardes latérales par rapport à l'assise, rendu possible en raison de leur articulation, est limité en deux positions extrêmes :
- une première position où les rambardes sont repliées, et plaquées contre l'assise, tel que représenté sur la figure 4 et sur la figure 7 ; et
- une position déployée, illustrée par exemple sur les figures 1 à 3 d'une part, 5 et 6 d'autre part, où les rambardes forment environ un angle de 120° à 130° par rapport au plan de l'assise.

Ce débattement est en effet limité dans la mesure où les rambardes sont munies d'une saillie ou axe (21), émanant de leur bord distal (19), et reçue dans une lumière de forme arquée (20) ménagée au sein de la platine. L'extrémité de chacune desdites lumières est pourvue d'un alésage plus important (30), de telle sorte à permette l'insertion de l'extrémité de l'axe (21) de chacune des rambardes à ce niveau, lorsque lesdites rambardes ne sont pas en position verrouillée.

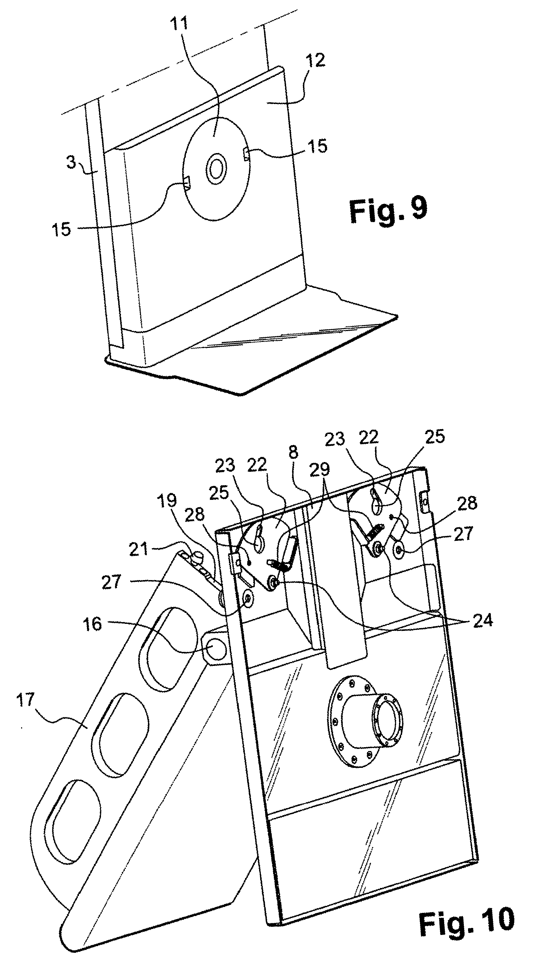

On a de fait représenté en relation avec les figures 10 à 12, le principe de verrouillage desdites rambardes.

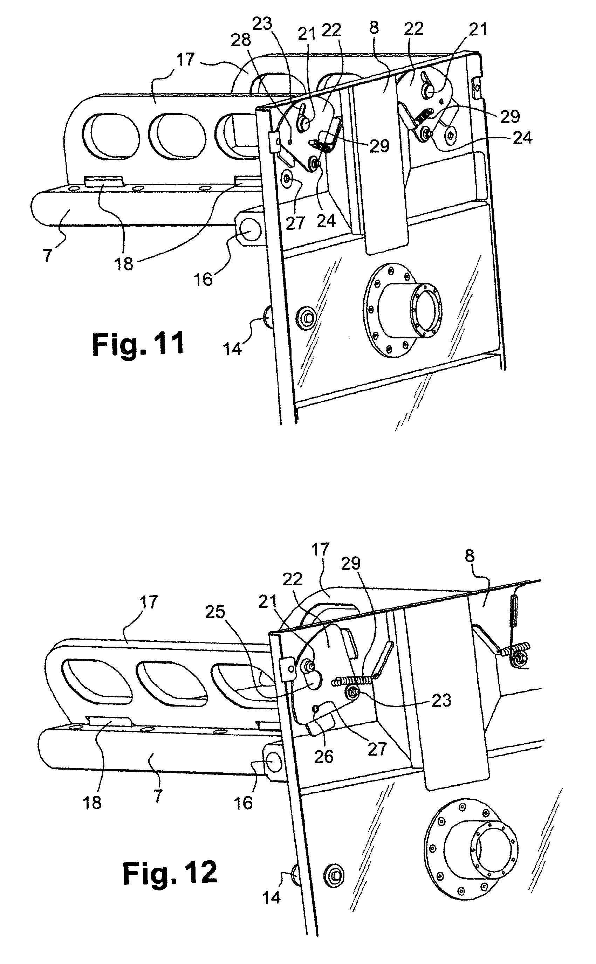

Ainsi, en figure 10, l'assise est en cours de basculement, afin de l'amener en position horizontale. Sur la figure 11, l'assise a terminé sa course rotative par rapport à son axe d'articulation (16), de sorte que d'une part, le bord distal (19) de chacune des rambardes vient prendre appui contre la platine, et d'autre part, l'axe (21) de chacune desdites rambardes pénètre dans l'alésage de plus grand diamètre (30) de chacune des lumières 1 arquées (20).

On poursuit l'étape de verrouillage des rambardes en les écartant l'une de l'autre, induisant l'entraînement, par le biais des axes (21), de secteurs de disque (22), articulés en (24) sur la platine (8), et eux-mêmes pourvus d'une lumière (23). Cette lumière (23) comporte un alésage (25) coaxial avec l'alésage de grand diamètre (30) de la lumière arquée (20) lorsque les rambardes ne sont pas encore en position opérationnelle, de telle sorte à permettre l'insertion des axes (21) à ce niveau (voir figure 10).

A cet égard, il convient de souligner que l'extrémité de chacun des axes (21) présente un diamètre correspondant sensiblement au diamètre de l'alésage (25) des secteurs (22) et du grand diamètre des lumières arquées (20), mais les axes (21) proprement dits, ont un diamètre inférieur, et correspondant, au jeu près, à la largeur desdites lumières arquées (20), et ce, dans un souci d'assurer la rétention des rambardes en position opérationnelle, lorsque celles-ci sont verrouillées.

Ainsi, en écartant les rambardes l'une par rapport à l'autre, après insertion des axes (21) dans les lumières (20, 25), lesdits axes (21) sont guidés dans les lumières arquées (20) et entrainent la rotation des secteurs (22) jusqu'à aboutir en bout desdites lumières arquées. Corollairement, on assure le maintien des rambardes dans cette position, en raison de la rotation concomitante des secteurs (22), qui induit la réception de chacun des axes (21) dams une lumière, prolongeant l'alésage (25) et de largeur inférieure au diamètre de ce dernier (figure 12).

On conçoit de fait que lorsque l'on souhaite positionner l'assise en mode fonctionnel, celle-ci est soulevée par rapport à son axe de rotation (16) jusqu'à s'étendre de manière perpendiculaire par rapport à la platine et corolairement, les axes ou saillies (21) émanant de leur bord distal (19) sont introduits dans lesdites lumières. Les rambardes sont alors déployées jusqu'à l'encliquetage ou verrouillage des doigts d'indexage (26) dans les orifices (28) (Cf. ci-dessous), de sorte que l'assise est alors maintenue, en raison de la coopération des rambardes avec la platine, selon cette position horizontale stable.

Corollairement, en raison de la présence des secteurs de disque (22), on évite tout risque de pincement des doigts de l'utilisateur au niveau des lumières arquées (20), qui sont de fait systématique borgnes, à l'exception de leur alésage de grand diamètre (30), mais celui-ci est comblé par les axes (21).

En outre, on assure ainsi une résistance à la charge compatible avec les utilisateurs appelés à se servir du siège de l'invention. Typiquement, lorsque l'assise est en position opérationnelle haute pour enfant, le siège peut recevoir une charge de 100 kg. Lorsque l'assise est en position opérationnelle basse pour adulte, le siège peut recevoir une charge de 200 kg, étant rappelé que ce différentiel de charge admissible est inhérent à l'effet d'équerre rempli par les rambardes, se trouvant alors sous l'assise, et prenant appui, par le biais de leur bord distal (19) contre la platine (8).

Le déverrouillage desdites rambardes s'effectue par traction sur des organes (26) prévus à cet effet, et actionnables depuis la face apparente de la platine (8). Ces organes (26) sont en fait chacun constitué d'un axe, traversant ladite platine, et dont l'extrémité (27) est réceptionnée dans un orifice (28) prévu à cet effet au sein de chacun des secteurs de disque (22) lorsque les rambardes (17) sont en position verrouillée.

Lorsque l'on exerce une traction sur les organes (26), on libère les secteurs (22), qui, sous l'effet d'un ressort de rappel (29), dont l'un des points d'application est solidaire de la platine, tournent autour de leur axe d'articulation (24), induisant le positionnement de l'alésage (25) en regard de l'extrémité de l'axe (21), et corollairement le déverrouillage des rambardes (17), qui peuvent alors être rabattues en direction l'une de l'autre, jusqu'à aboutir à leur position d'origine, c'est-à-dire, avec leur axe respectif à l'aplomb de l'alésage de grand diamètre (30) des lumières arquées (20), puis le rabat de l'assise en position parallèle à la platine.

En outre, en raison de la présence de ces rambardes latérales, et lorsque l'assise est en position enfant, lesdites rambardes alors dirigées vers le haut sont également susceptibles de conférer à l'ensemble la fonction «*de table à langer*». Ce faisant, le siège peut recevoir un nourrisson, c'est-à-dire un enfant en bas âge dépourvu de stabilité en position assise, pour ainsi permettre l'acquisition de photos d'identité du nourrisson, et ce dans des conditions de sécurité optimisée. A cet effet, la cabine conforme à l'invention comporte, au niveau de la face interne du plafond (4), d'une part, une caméra vidéo ou un appareil photo numérique, et d'autre part, des moyens d'éclairage, donc dirigés vers le bas.

Lorsqu'enfin, on souhaite procéder à l'escamotage du siège conforme à l'invention, on rabat les rambardes contre l'assise, celle-ci étant avantageusement maintenue dans cette position au moyen d'aimants permanents ou autre, puis on rabat simplement l'assise contre la platine, celle-ci étant maintenue avantageusement dans sa position d'escamotage, également par le biais d'au moins un aimant permanent.

Dans cette hypothèse, et en raison de l'absence de cloison latérale de la cabine, l'accessibilité est optimisée pour les fauteuils roulants, permettant à une personne de mobilité réduite de procéder à l'acquisition des données biométriques de son choix en se positionnant avec son fauteuil en lieu et place du siège alors escamoté.

On conçoit tout l'intérêt du siège et de l'installation conformes à l'invention en raison notamment de sa simplicité de réalisation et d'utilisation, permettant ainsi à un large public d'acquérir les données, notamment biométriques, nécessaires notamment à la réalisation de pièces d'identité à caractère officiel.

## Revendications

1. Siège (6) pour une installation d'acquisition de données, notamment biométriques d'une personne, comprenant :
- une platine (8) montée rotative sur un bâti ;
- une assise (7), articulée sur ladite platine selon un axe d'articulation (16) non concourant avec l'axe de rotation (9) de ladite platine (8), de telle sorte à définir une position escamotée, selon laquelle l'assise est rabattue contre la platine, et au moins une position opérationnelle, selon laquelle l'assise s'étend sensiblement perpendiculairement par rapport à la platine ;
- des rambardes latérales (17), articulées (18) le long des deux bords latéraux de l'assise (7) et aptes à coopérer avec ladite platine rotative de telle sorte à stabiliser l'assise en position opérationnelle et typiquement horizontale.

2. Siège (6) pour une installation d'acquisition de données, notamment biométriques d'une personne selon la revendication 1, ***caractérisé* en ce qu'**il comprend des moyens aptes à conférer à l'assise deux positions opérationnelles stables :
- une première position, selon laquelle l'axe d'articulation (16) de l'assise (7) sur la platine (8) est situé de manière plus haute que l'axe de rotation (9) de la platine, dite position enfant ;
- et une seconde position, selon laquelle l'axe d'articulation (16) de l'assise (7) sur la platine (8) est situé de manière plus basse que l'axe de rotation (9) de la platine, dite position adulte.

3. Siège (6) pour une installation d'acquisition de données, notamment biométriques d'une personne selon la revendication 2, ***caractérisé* en ce que** l'on passe de la première position opérationnelle à la seconde position opérationnelle de l'assise par rotation de 180° de la platine.

4. Siège (6) pour une installation d'acquisition de données, notamment biométriques d'une personne selon l'une des revendications 2 et 3, ***caractérisé* en ce que** les moyens conférant la stabilité aux deux positions opérationnelles de l'assise sont constitués d'organes d'indexation et de fixation (14) montés sur la platine (8) et aptes à coopérer avec des orifices (15), ménagés à cet effet au sein d'un boitier postérieur (12) monté sur le bâti, et auquel est solidarisée ladite platine (8), lesdits moyens étant déverrouillables.

5. Siège (6) pour une installation d'acquisition de données, notamment biométriques d'une personne selon l'une des revendications 1 à 4, ***caractérisé* en ce que** les rambardes latérales (17) sont munies de moyens verrouillables de fixation, aptes à coopérer avec la platine, et aptes à assurer la fixation de l'assise en position opérationnelle.

6. Siège (6) pour une installation d'acquisition de données, notamment biométriques d'une personne selon l'une des revendications 1 à 5, ***caractérisé* en ce que** l'assise (7) est munie de moyens de fixation réversible en position rabattue, c'est-à-dire escamotée, contre la platine ou le bâti, ce moyen étant avantageusement constitué d'au moins un aimant permanent.

7. Installation pour l'acquisition de données, notamment biométriques d'une personne, comprenant un bâti (2, 3), ouvert au moins au niveau de l'une de ses faces latérales, et muni de moyens d'acquisition desdites données, ***caractérisée* en ce qu'**elle intègre un siège selon l'une des revendications 1 à 6, ledit siège étant fixé contre la face interne postérieure (3) de l'installation, faisant face à la paroi comportant les moyens techniques d'acquisition des données biométriques.

8. Installation pour l'acquisition de données, notamment biométriques d'une personne selon la revendication 7, ***caractérisée* en ce que** les deux faces latérales du bâti sont ouvertes afin de faciliter l'accès de fauteuils roulants à l'intérieur et leur sortie, et **en ce que** lesdites faces latérales sont occultables réversiblement au moyen de rideaux ou équivalents afin d'optimiser la qualité des prises de vue lorsqu'il s'agit de réaliser des photos d'identité et réserver l'intimité du sujet.

9. Installation pour l'acquisition de données, notamment biométriques d'une personne selon l'une des revendications 7 et 8, ***caractérisée* en ce que** le bâti comporte en outre un plafond ou toit (4), et **en ce que** ce dernier est muni également d'une caméra numérique ou d'un appareil photo numérique, outre de moyens d'éclairage, propres à permettre l'acquisition des photos d'identité d'un nourrisson allongé, positionné sur l'assise du siège montée en position opérationnelle enfant.

## Claims

1. Seat (6) for an installation for the acquisition of data of a person, particularly of biometric data, comprising:
- a plate (8) mounted to rotate on a structure;
- a seat part (7), articulated on said plate on an axis of articulation (16) non-intersecting with the axis of rotation (9) of said plate (8), in such a way as to define a retracted position, in which the seat part is folded away against the plate, and at least one operational position, in which the seat part extends substantially perpendicularly relative to said plate;
- lateral guard rails (17), articulated (18) along the two lateral edges of the seat part (7) and capable of engaging with said rotary plate in such a way as to stabilize the seat part in the operational and typically horizontal position.

2. Seat (6) for an installation for the acquisition of data of a person, particularly of biometric data, as claimed in claim 1, ***characterized* in that** it includes means capable of conferring on the seat part two stable operational positions
- a first position, in which the axis of articulation (16) of the seat part (7) on the plate (8) is situated higher than the axis of rotation (9) of the plate, known as the child position;
- and a second position, in which the axis of articulation (16) of the seat part (7) on the plate (8) is situated lower than the axis of rotation (9) of the plate, known as the adult position.

3. Seat (6) for an installation for the acquisition of data of a person, particularly of biometric data, as claimed in claim 2, ***characterized* in that** the movement from the first operational position to the second operational position is performed by 180° rotation of the plate.

4. Seat (6) for an installation for the acquisition of data of a person, particularly of biometric data, as claimed in one of claims 2 and 3, ***characterized* in that** the means conferring stability on the two operational positions of the seat part are constituted by indexing and fastening components (14) mounted on the plate (8) and capable of engaging with orifices (15), provided for the purpose in a back unit (12) mounted on the structure, and to which said plate (8) is secured, said means being unlockable.

5. Seat (6) for an installation for the acquisition of data of a person, particularly of biometric data, as claimed in one of claims 1 to 4, ***characterized* in that** the lateral guardrails (17) are provided with lockable fastening means, capable of engaging with the plate, and capable of fastening the seat part in the operational position.

6. Seat (6) for an installation for the acquisition of data of a person, particularly of biometric data, as claimed in one of claims 1 to 5, ***characterized* in that** the seat part (7) is provided with reversible fastening means in the folded away, in other words retracted, position, against the plate or the structure, said means being to advantage constituted by at least one permanent magnet.

7. Installation for the acquisition of data of a person, particularly of biometric data, including a structure (2,3), open on at least one of the lateral faces thereof, and provided with means for the acquisition of said data, ***characterized* in that** it incorporates a seat as claimed in one of claims 1 to 6, said seat being fixed against the internal rear face (3) of the installation, opposite the wall comprising the technical means for the acquisition of biometric data.

8. Installation for the acquisition of data of a person, particularly of biometric data, as claimed in claim 7, ***characterized* in that** the two lateral faces of the structure are open in order to facilitate inward access to wheelchairs and their exit therefrom, and **in that** said lateral faces are reversibly concealable by means of curtains or the equivalent in order to optimize the quality of the shots when identity photos are being taken and to respect the privacy of the individual concerned.

9. Installation for the acquisition of data of a person, particularly of biometric data, as claimed in one of claims 7 and 8, ***characterized* in that** the structure further comprises a ceiling or roof (4), and **in that** the latter is also provided with a digital cine-camera or digital camera, as well as lighting means, suitable for allowing identity photos to be taken of an infant stretched out and placed on the seat part of the seat mounted in the child operational position.

## Patentansprüche

1. Sitz (6) für eine Anlage zur Erfassung von insbesondere biometrischen Daten einer Person, Folgendes aufweisend:
- eine an einem Gestell drehbar angebrachte Platte (8);
- eine Sitzfläche (7), die an der Platte entlang einer mit der Drehachse (9) der Platte (8) nicht zusammenlaufenden Anlenkachse (16) so angebracht ist, dass eine eingeklappte Stellung, in der die Sitzfläche an die Platte zurückgeklappt ist, und mindestens eine Betriebsstellung bestimmt wird, in der sich die Sitzfläche im Wesentlichen senkrecht in Bezug auf die Platte erstreckt
- seitliche Brüstungen (17), die längs zweier Seitenränder der Sitzfläche (7) angelenkt sind und mit der drehbaren Platte so zusammenwirken können, dass die Sitzfläche in der typischerweise horizontalen Betriebsstellung stabilisiert wird.

2. Sitz (6) nach Anspruch 1, für eine Anlage zur Erfassung von insbesondere biometrischen Daten einer Person, **dadurch gekennzeichnet, dass** er Einrichtungen umfasst, die der Sitzfläche zwei stabile Betriebsstellungen verleihen können:
- eine erste Stellung, Kinderstellung genannt, in der sich die Anlenkachse (16) der Sitzfläche (7) an der Platte (8) höher als die Drehachse (9) der Platte befindet;
- eine zweite Stellung, Erwachsenenstellung genannt, in der sich die Anlenkachse (16) der Sitzfläche (7) an der Platte (8) tiefer als die Drehachse (9) der Platte befindet.

3. Sitz (6) nach Anspruch 2, für eine Anlage zur Erfassung von insbesondere biometrischen Daten einer Person, **dadurch gekennzeichnet, dass** von der ersten Betriebsstellung zur zweiten Betriebsstellung durch Drehen der Platte um 180° übergegangen wird.

4. Sitz (6) nach einem der Ansprüche 2 und 3, für eine Anlage zur Erfassung von insbesondere biometrischen Daten einer Person, **dadurch gekennzeichnet, dass** die Einrichtungen, die den beiden Betriebsstellungen der Sitzfläche die Stabilität verleihen, durch Indexierungs- und Fixierungsmittel (14) gebildet sind, die an der Platte (8) angebracht sind und mit Öffnungen (15) zusammenwirken können, die zu diesem Zweck in einem am Gestell angebrachten hinteren Gehäuse (12) ausgebildet sind, und mit dem die Platte (8) fest verbunden ist, wobei die Einrichtungen entriegelbar sind.

5. Sitz (6) nach einem der Ansprüche 1 bis 4, für eine Anlage zur Erfassung von insbesondere biometrischen Daten einer Person, **dadurch gekennzeichnet, dass** die seitlichen Brüstungen (17) mit verriegelbaren Fixierungseinrichtungen versehen sind, die mit der Platte zusammenwirken können, und die die Fixierung der Sitzfläche in der Betriebsstellung sicherstellen können.

6. Sitz (6) nach einem der Ansprüche 1 bis 5, für eine Anlage zur Erfassung von insbesondere biometrischen Daten einer Person, **dadurch gekennzeichnet, dass** die Sitzfläche (7) mit Einrichtungen zur reversiblen Fixierung in der an die Platte oder das Gehäuse zurückgeklappten, d.h. eingeklappten Stellung versehen ist, wobei diese Einrichtung vorteilhafter Weise durch mindestens einen Dauermagneten gebildet ist.

7. Anlage zur Erfassung von insbesondere biometrischen Daten einer Person, ein Gehäuse (2, 3) umfassend, das zumindest im Bereich einer seiner Seitenflächen offen und mit Einrichtungen zum Erfassen der Daten versehen ist, **dadurch gekennzeichnet, dass** sie einen Sitz nach einem der Ansprüche 1 bis 6 eingebaut hat, wobei der Sitz an der hinteren Innenfläche (3) der Anlage gegenüber der Wand befestigt ist, die die technischen Einrichtungen zur Erfassung der biometrischen Daten aufweist.

8. Anlage nach Anspruch 7, zur Erfassung von insbesondere biometrischen Daten einer Person, **dadurch gekennzeichnet, dass** die beiden Seitenflächen des Gehäuses offen sind, um den Zugang von Rollstühlen in das Innere und deren Herausfahren zu erleichtern, und dass die Seitenflächen mittels Vorhängen o. dgl. reversibel verschlossen werden können, um die Qualität der Aufnahmen zu optimieren, wenn es darum geht, Ausweisfotos herzustellen, und die Intimität des Menschen zu wahren.

9. Anlage nach einem der Ansprüche 7 und 8, zur Erfassung von insbesondere biometrischen Daten einer Person, **dadurch gekennzeichnet, dass** das Gehäuse darüber hinaus eine Decke oder ein Dach (4) umfasst, und dass diese/s außer mit Beleuchtungseinrichtungen auch mit einer Digitalkamera oder einem digitalen Fotoapparat ausgestattet ist, die sich dazu eignen, Ausweisbilder eines liegenden Säuglings zu erfassen, der sich auf der Sitzfläche des in der Kinderbetriebsstellung angebrachten Sitzes befindet.
